(19) **Europäisches Patentamt / European Patent Office / Office européen des brevets**

(11) **EP 4 317 352 A1**

(12) ## EUROPEAN PATENT APPLICATION
published in accordance with Art. 153(4) EPC

(43) Date of publication:
**07.02.2024 Bulletin 2024/06**

(21) Application number: **22780260.0**

(22) Date of filing: **18.03.2022**

(51) International Patent Classification (IPC):
**C09K 3/10** $^{(2006.01)}$

(52) Cooperative Patent Classification (CPC):
**C09K 3/10**

(86) International application number:
**PCT/JP2022/012754**

(87) International publication number:
**WO 2022/210045 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021 JP 2021056892**

(71) Applicant: **Nitto Denko Corporation
Ibaraki-shi, Osaka 567-8680 (JP)**

(72) Inventor: **MORITA, Kosuke
Ibaraki-shi, Osaka 567-8680 (JP)**

(74) Representative: **Grünecker Patent- und
Rechtsanwälte
PartG mbB
Leopoldstraße 4
80802 München (DE)**

(54) **SEALANT SHEET**

(57)     Provided is a polysulfide-based sealant that allows to obtain a highly reliable molded product (cured material) with reduced formation and growth of air bubbles. A sealant sheet formed in a sheet shape is provided.

The sealant sheet comprises a polysulfide polymer (A), a thiol compound (B) having two or more thiol groups per molecule, an allyl compound (C) having two or more allyl groups per molecule, and a photo-radical generator (D).

[Fig. 1]

FIG.1

## Description

[Technical Field]

The present invention relates to a sealant in a sheet shape, that is, a sealant sheet. This application claims priority to Japanese Patent Application No. 2021-56892 filed on March 30, 2021; and the entire content thereof is incorporated herein by reference.

[Background Art]

Liquid polysulfide polymer includes -S-S- bonds in the molecule; and therefore, when allowed to cure, it can form a rubbery cured material having excellent resistance to oil such as jet fuel and hydraulic oil (oil resistance). Accordingly, liquid polysulfide polymer is used as a sealant material for aircrafts, for example. Technical documents on liquid polysulfide polymer include Patent Documents 1 to 3.

[Citation List]

[Patent Literature]

[Patent Document 1] Japanese Translation of PCT International Application No. 2015-517012
[Patent Document 2] Japanese Translation of PCT International Application No. 2018-506543
[Patent Document 3] Japanese Translation of PCT International Application No. 2019-521223

[Summary of Invention]

[Technical Problem]

A sealant using liquid polysulfide polymer is put on by mixing liquid A containing liquid polysulfide polymer and liquid B containing a curing agent for the polysulfide polymer immediately before the application to prepare a liquid sealant, applying the liquid sealant to a target object and allowing it to cure on the target object. As the curing agent, strong oxidizing agents such as dichromic acid are often used as they can allow the curing reaction to readily proceed at room temperature.

While such a liquid sealant undergoes curing reaction, outgassing and the like due to the curing reaction may lead to formation of air bubbles inside the sealant. Such air bubbles grow inside the sealant. In some cases, the curing reaction may progress as it is, leaving the air bubbles inside the cured material. The presence of air bubbles remaining inside the sealant may lower the reliability of the cured sealant, leading to a problem in view of degradation of sealing quality.

In view of such circumstances, an objective of this invention is to provide a polysulfide-based sealant that allows to obtain a highly reliable molded product (cured material) with reduced formation and growth of air bubbles.

[Solution to Problem]

To achieve the objective, this description provides a sealant sheet formed in a sheet shape. The sealant sheet has viscoelasticity to the extent that it can stably maintain the sheet shape (i.e., it is significantly less fluid and harder than liquids); and therefore, it helps inhibit the formation and growth of air bubbles inside the sealant sheet.

In an embodiment, the sealant sheet disclosed herein comprises a polysulfide polymer (A), a thiol compound (B) having two or more thiol groups per molecule, an allyl compound (C) having two or more allyl groups per molecule, and a photo-radical generator (D).

By the radical addition reaction (thiol-ene reaction) between the thiol group and the allyl group, the sealant sheet in this embodiment can be cured to increase the strength while placed in desired areas. Here, the uncured sealant sheet has suitable elasticity with which the sheet shape can be stably maintained. Thus, even in case of outgassing and the like due to the radical addition reaction, the formation and growth of air bubbles inside the sealant sheet can be inhibited. Accordingly, it is likely that the resulting cured sealant will be free of air bubbles, or even if it includes air bubbles, their sizes will be limited. In particular, because the photo-radical generator (D) is considered a possible source of outgassing, it is significant to apply the art of this invention in a system including the photo-radical generator (D).

The cured sealant thus formed (cured product of the sealant sheet) may show excellent oil resistance due to the polysulfide structure. Furthermore, because the thickness of the cured material can be controlled with the thickness of the sealant sheet being used, its application does not require adjustment of coating thickness as in application of a liquid sealant. Thus, according to the sealant sheet, a polysulfide-based sealant can be easily applied with precision. In addition, the sealant sheet is configured to generate radicals from the photo-radical generator (D) by photoirradiation, thereby promoting the addition reaction; and therefore, it can keep well when stored in an environment that suppresses radical generation from the photo-radical generator (D).

As the thiol compound (B), in view of the balance between the storage properties before use and the curing properties upon use, it is preferable to use a species having a thiol equivalent weight of 45 g/eq or higher and 450 g/eq or lower.

In a preferable embodiment disclosed herein, the sealant sheet comprises, as the allyl compound (C), at least one species selected from the group consisting of bifunctional allyl compounds and trifunctional allyl compounds. According to such an allyl compound (C)-containing embodiment, the pre-use storability and curing properties at the time of use are likely to improve in a well-balanced manner.

As the photo-radical generator (D), for instance, it is preferable to use at least one species selected from the group consisting of an alkyl phenone-based photopolymerization initiator, an acyl phosphine oxide-based photopolymerization initiator and a titanocene compound-based photopolymerization initiator. With such a photo-radical generator (D), it is possible to favorably obtain a sealant sheet that combines good pre-use storability and good curing properties (photo-radical curing properties) at the time of use in a well-balanced manner.

The sealant sheet disclosed herein can comprise a filler. The use of filler may improve either or both of the strength and the stretchiness of the cured sealant.

The sealant sheet preferably has a storage modulus of 0.005 MPa or greater and 0.8 MPa or less at 25 °C. With the sealant sheet having a storage modulus in this range, a suitable balance can be easily achieved between tightness of adhesion to the target object and retention stability of the sheet shape.

In another embodiment, the sealant sheet disclosed herein is a sealant sheet formed in a sheet shape and comprises a thiol group-containing polysulfide polymer (AB) having two or more thiol groups per molecule, an allyl compound (C) having two or more allyl groups per molecule, and a photo-radical generator (D). The sealant sheet in such an embodiment can also be cured through the radical addition reaction between the thiol and allyl groups to increase the strength while placed in desired areas. Here, the uncured sealant sheet has suitable elasticity with which the sheet shape can be stably maintained. Thus, even in case of outgassing and the like due to the radical addition reaction, the formation and growth of air bubbles inside the sealant sheet can be inhibited. Accordingly, it is likely that the resulting cured sealant will be free of air bubbles, or even if it includes air bubbles, their sizes will be limited.

The sealant sheet prior to use (i.e., before placed in a desired area) may be in a form of release-lined sealant sheet comprising the sealant sheet and a release liner having a release face in contact with at least one face of the sealant sheet. The sealant sheet in such an embodiment is preferable from the standpoint of its preservability and ease of handling during its transportation, processing, placement in a desired area, etc.

The present description also provides a cured sealant, which is a cured material of a polysulfide-based sealant. The cured material comprises a disulfide structure, a structure formed by a radical addition reaction between thiol groups and allyl groups, and a compound derived from a photo-radical generator. Such a cured sealant is preferable because it can be formed by promoting the radical addition reaction (thiol-ene reaction) between thiol groups and allyl groups with the triggering radicals generated from the photo-radical generator.

The scope of the invention for which the present patent application seeks patent protection may include a suitable combination of the features described above.

[Brief Description of Drawings]

Fig. 1 shows a cross-sectional diagram schematically illustrating a constitutional example of the sealant sheet.
Fig. 2 shows a cross-sectional diagram schematically illustrating another constitutional example of the sealant sheet.

[Description of Embodiments]

Preferred embodiments of the present invention are described below. Matters necessary to practice this invention other than those specifically referred to in this description can be understood by a person skilled in the art based on the disclosure about implementing the invention in this description and common general knowledge at the time of application. The present invention can be practiced based on the contents disclosed in this description and common technical knowledge in the subject field. In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent accurate sizes or reduction scales of the product actually provided.

<Sealant sheet>

The sealant sheet disclosed herein is pre-formed in a sheet shape and can be placed in an area to be sealed with it in the sheet form. In this aspect, the sealant sheet is clearly distinct from a liquid sealant (e.g., a liquid sealant prepared by mixing liquid A containing a liquid polysulfide polymer and liquid B containing a curing agent for the polysulfide polymer immediately before application) applied in a liquid form to an area to be sealed. The sealant sheet disclosed herein can be cured by taking advantage of the addition reaction (thiol-ene reaction) between the thiol group and the allyl group. In terms of having such curing properties, the sealant sheet disclosed herein is clearly distinct from the sealant after cured (cured sealant). The sealant sheet disclosed herein can be thought as a semi-cured sealant sheet which can be further cured after placed in an area to be sealed.

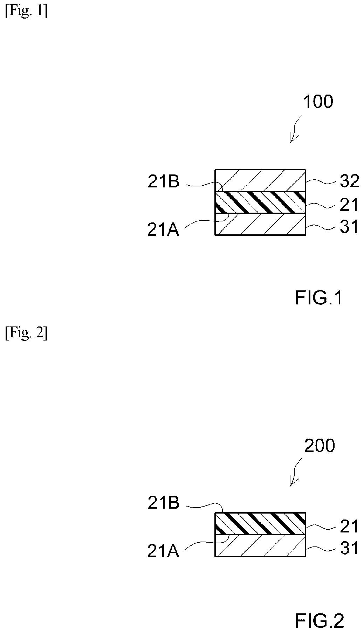

Figs 1 and 2 show constitutional examples of the sealant sheet disclosed herein.

In a sealant sheet 21 shown in Fig. 1, one face (first face) 21A and the other face (second face) 21B thereof are protected, respectively, with release liners 31 and 32 each having a release face at least on the sealant sheet 21 side. Sealant sheet 21 in such an embodiment can be thought as a component of a release-lined sealant sheet 100 comprising sealant sheet 21, release liners 31 and 32.

Sealant sheet 21 shown in Fig. 2 has a constitution where one face 21A thereof is protected with release liner 31 having a release face on each side so that, when it is wound, the other face 21B of sealant sheet 21 is brought in contact with and protected also with release liner 31. Sealant sheet 21 in such an embodiment can be thought as a component of a release-lined sealant sheet 200 comprising sealant sheet 21 and release liner 31.

The sealant sheet disclosed herein preferably has shape-holding properties that enable stable retention of the sheet shape at room temperature (e.g., about 25 °C). The shape-holding properties can also be thought as resistance to plastic deformation such as creep deformation. The sealant sheet can have a storage modulus at 25 °C (or simply a "storage modulus" hereinafter) of, for instance, 0.005 MPa or greater (e.g., greater than 0.005 MPa), or preferably greater than 0.01 MPa. With increasing storage modulus of the sealant sheet, the handling properties and ease of processing (e.g., ease of cutting, antiblocking properties, re-workability) of the sealant sheet tend to increase. In some embodiments, the storage modulus of the sealant sheet can be, for instance, 0.05 MPa or greater, 0.1 MPa or greater, or even 0.2 MPa or greater. The maximum storage modulus is not particularly limited. In some embodiments, the storage modulus of the sealant sheet can be, for instance, 2 MPa or less, 1 MPa or less, 0.8 MPa or less, 0.6 MPa or less, 0.5 MPa or less, 0.4 MPa or less, or even 0.3 MPa or less. With decreasing storage modulus of the sealant sheet, the conformability to surface contours in areas to be sealed tends to increase.

The storage modulus is determined at a frequency of 1 Hz at 0.5 % strain, using a rheometer. As the rheometer, model name ARES G2 available from TA Instruments Japan, Inc. or a comparable system can be used. More specifically, the storage modulus is determined by the method described later in Examples.

As used herein, the storage modulus of the sealant sheet means the storage modulus of the uncured sealant sheet unless otherwise noted and is distinguished from the storage modulus of the cured sealant sheet (cured sealant). As used herein, the storage modulus of the sealant sheet typically means the storage modulus of the sealant sheet prior to use, that is, prior to placement by adhesion, etc., in the area to be sealed.

The thickness of the sealant sheet is not particularly limited and can be selected in accordance with the thickness of the cured sealant to be obtained. From the standpoint of the sealing reliability, etc., in some embodiments, the sealant sheet may have a thickness of, for instance, 0.01 mm or greater, 0.03 mm or greater, 0.05 mm or greater, 0.1 mm or greater, or even 0.15 mm or greater. The sealant sheet disclosed herein can also be made in an embodiment where the thickness is, for instance, greater than 0.3 mm, greater than 0.5 mm, greater than 1 mm, or even greater than 1.5 mm. In some embodiments, the sealant sheet may have a thickness of, for instance, 10 mm or less, 5 mm or less, 3 mm or less, 2 mm or less, 1 mm or less, 0.5 mm or less, or even 0.3 mm or less. With decreasing thickness of the sealant sheet, the photo-curing properties tend to improve. It may be advantageous to reduce the thickness of the sealant sheet from the standpoint of the conformability to surface contours in the area to be sealed, weight reduction, etc.

<Polysulfide polymer (A)>

The sealant sheet disclosed herein comprises a polysulfide polymer (A). The polysulfide polymer (A) has a repeat unit that includes a disulfide structure represented by -S-S- and contributes to greater oil resistance of the cured material formed from the sealant sheet.

One molecule of polysulfide polymer (A) may include one, two or more disulfides. From the standpoint of the oil resistance of the cured material, it is preferable to use a polysulfide polymer (A) having an average of three or more disulfide structures per molecule. The average number of disulfide structures per molecule of polysulfide polymer (A) (or the average disulfide group count, hereinafter) can be, for instance, 5 or greater, 10 or greater, 15 or greater, or even 20 or greater. The upper limit of the average disulfide group count is not particularly limited. From the standpoint of the ease of manufacturing the sealant sheet (e.g., the ease of molding into a sheet shape), etc., it can be, for instance, 100 or less, 70 or less, or even 50 or less.

The disulfide structure is preferably in the main chain of polysulfide polymer (A). When the main chain includes the disulfide structure, the resulting cured material tends to show good stretchiness.

In some embodiments, the polysulfide polymer (A) preferably includes a repeat unit represented by the next general formula (1):

$$-R^1-O-R^2-O-R^3-S-S- \qquad (1)$$

Here, $R^1$, $R^2$ and $R^3$ in the general formula (1) are independently an alkylene group with 1 to 4 carbon atoms, preferably an alkylene group with 1 to 3 carbon atoms, or more preferably an alkylene group with 1 or 2 carbon atoms. The repeat unit (1) has a structure in which an ether structure is connected to a disulfide structure. With a polysulfide polymer (A) having such a repeat unit (1), the resulting cured material tends to have excellent oil resistance and flexibility. The average number of repeat units (1) per molecule of polysulfide polymer (A) can be, for instance, 5 or greater, 10 or greater, 15 or greater, or 20 or greater. The average number can be, for instance, 100 or less, 70 or less, or even 50 or less. The polysulfide polymer (A) may have, per molecule, solely one region with successive repeat units (1), or two or more such regions.

In some embodiments, the polysulfide polymer (A) may include at least one among structures represented by the following general formulas (2a) and (2b):

$$-CH_2-S-CH_2CHOH-R' \qquad (2a)$$

$$-CH_2-S-CH(CH_2OH)-R' \qquad (2b)$$

Here, R' in the general formulas (2a) and (2b) is an organic group having at least one (e.g., about 1 to 5) epoxy group(s). The structures of the general formulas (2a) and (2b) can be formed, for instance, by addition reaction between a thiol having a structural moiety represented by $-CH_2-SH$ and an epoxy compound having a substituent group R' on the epoxy ring. The number of structural units represented by the general formula (2a) or (2b) (the total number when both a structure represented by the general formula (2a) and a structure represented by the general formula (2b) are included) can be, as the average number per molecule of polysulfide polymer (A), for instance, 1.1 or greater, 1.3 or greater, 1.5 or greater, 1.8 or greater, 2.0 or greater, or even greater than 2.0. The average number can be, for instance, 15 or less, 10 or less, 7.0 or less, or even 5.0 or less.

Structures represented by the general formulas (2a) and (2b) can be formed by the addition reaction of thiol groups and epoxy groups. The polysulfide polymer (A) containing a structure represented by the general formula (2a) or (2b) can be, for instance, a reaction product of a thiol group-containing polysulfide having a disulfide structure and a thiol group in one molecule, and an epoxy compound having two or more epoxy groups in one molecule; or a modified product thereof.

The weight average molecular weight (Mw) of the thiol group-containing polysulfide as a precursor of the polysulfide polymer (A) is not particularly limited. For instance, it can be 500 or higher, 800 or higher, 1000 or higher, above 1000, or even above 2000. A thiol group-containing polysulfide having a higher Mw tends to lead to formation of a sealant sheet that provides a cured material with greater stretchiness. In some embodiments, the Mw of the thiol group-containing polysulfide can be, for instance, above 2500, above 3000, or even above 3500. The Mw of the thiol group-containing polysulfide can be, for instance, 30000 or lower, or even 10000 or lower. From the standpoint of the ease of handling and reactivity with the epoxy compound, in some embodiments, the Mw of the thiol group-containing polysulfide can be, for instance, below 9000, below 8000, below 7500, below 7000, or even below 6500.

Here, the Mw of the thiol group-containing polysulfide, an epoxy group-containing polysulfide described later, polysulfide polymer (A) or the like can be determined based on polyethylene glycol by gel permeation chromatography (GPC), using tetrahydrofuran (THF) as the mobile phase. Alternatively, a nominal value given in a catalog, literature and the like can be used.

The thiol group-containing polysulfide preferably includes the disulfide structure in the main chain. According to a sealant sheet comprising a polysulfide polymer (A) that is a reaction product (or a modified product thereof) of a thiol group-containing polysulfide with a disulfide structure in the main chain and an epoxy compound having two or more epoxy groups per molecule, the resulting cured material tends to show good stretchiness. The number (as the average number) of disulfide structures in one molecule of the thiol group-containing polysulfide (or the average disulfide group count of the entire thiol group-containing polysulfide used) can be, for instance, 3 or greater, 5 or greater, 10 or greater, 15 or greater, or even 20 or greater. The upper limit of the average disulfide group count is not particularly limited. From the standpoint of the ease of manufacturing the sealant sheet (e.g., the ease of molding into a sheet shape), etc., it can be, for instance, 100 or less, 70 or less, or even 50 or less.

The thiol group-containing polysulfide as a precursor of the polysulfide polymer (A) may include one, two or more thiol groups per molecule of thiol group-containing polysulfide. From the standpoint of readily obtaining a sealant sheet suited for increasing the strength of the cured material and reducing the curing time, a preferable thiol group-containing polysulfide includes more than one thiol group in average per molecule. The average number of thiol groups per molecule of the thiol group-containing polysulfide used (or the average thiol group count) can be, for instance, 1.1 or greater, 1.3 or greater, 1.5 or greater, 1.8 or greater, 2 or greater, or even greater than 2. The upper limit of the average thiol group count is not particularly limited. From the standpoint of the flexibility of the cured material, it can be, for instance, 15 or less, 10 or less, 7 or less, or even 5 or less. A polysulfide having an average of two or more thiol groups can be thought as a thiol compound (B) having two or more thiol groups per molecule.

The thiol group is preferably placed at a terminus of the thiol group-containing polysulfide. By allowing such a thiol group-containing polysulfide to react with an epoxy compound having two or more epoxy groups per molecule, a polysulfide polymer having a terminal epoxy group can be favorably formed. The thiol group-containing polysulfide used may have a thiol group at one terminus of the main chain or at each terminus of the main chain; it may further have another thiol group elsewhere besides the termini of the main chain; or it can be a mixture of these. It is particularly preferable to use a thiol group-containing polysulfide having a thiol group at each terminus of the main chain, that is, a thiol-bi-terminated polysulfide. According to a sealant sheet comprising a polysulfide polymer (A) synthesized using a thiol-biterminated polysulfide, the resulting cured material tends to combine well-balanced strength and stretchiness. In some embodiments, of the entire thiol group-containing polysulfide used, the ratio of the thiol-bi-terminated polysulfide can be, by weight, for instance, above 50 %, above 70 %, above 90 %, above 95 %, above 98 %, or even essentially 100 %.

The thiol-biterminated polysulfide is preferably represented by the next general formula (3):

$$HS\text{-}(R^1\text{-}O\text{-}R^2\text{-}O\text{-}R^3\text{-}S\text{-}S)_n\text{-}R^1\text{-}O\text{-}R^2\text{-}O\text{-}R^3\text{-}SH \qquad (3)$$

$R^1$, $R^2$ and $R^3$ in the general formula (3) are independently an alkylene group with 1 to 4 carbon atoms, preferably an alkylene group with 1 to 3 carbon atoms, or more preferably an alkylene group with 1 or 2 carbon atoms. In the general formula (3), n can be an integer selected so that the compound of the general formula (3) has a formula weight in a range of, for instance, 500 or higher and 10000 or lower, 800 or higher below 9000, 1000 or higher below 8000, above 1000 and below 8000, or above 2000 and below 7500.

In some embodiments, as the compound represented by the general formula (3), it is preferable to use a thiol group-containing polysulfide wherein $R^1$ is $C_2H_4$, $R^2$ is $CH_2$, and $R^3$ is $C_2H_4$. In this embodiment, n in the general formula (3) can be, for instance, 3 to 70, 5 to 60, 7 to 50, or even 10 to 50.

(Epoxy group-containing polysulfide polymer (AA))

In a preferable embodiment of the art disclosed herein, the sealant sheet comprises, as the polysulfide polymer (A), an epoxy group-containing polysulfide polymer (AA) having two or more epoxy groups per molecule; and further comprises a thiol compound (B) having two or more thiol groups per molecule, an allyl compound (C) having two or more allyl groups per molecule, and a photo-radical generator (D). The sealant sheet in such an embodiment may further include or may be free of a polysulfide polymer (A) that is not an epoxy group-containing polysulfide polymer (AA).

The average number of epoxy groups per molecule of epoxy group-containing polysulfide polymer (AA) (or the average epoxy group count, hereinafter) can be, for instance, about 2 or greater and 20 or less. From the standpoint of the flexibility of the cured material, the average epoxy group count can also be, for instance, 15 or less, 10 or less, 7 or less, or even 5 or less. In some embodiments, the average epoxy group count can be 4 or less, or even 3 or less. The average epoxy group count is typically 2 or greater. From the standpoint of the curing properties and the cured material's strength, it can also be above 2, or even 2.5 or greater. In some embodiments, the average epoxy group count can be, for instance, 3 or greater, or even 4 or greater.

The epoxy groups in the epoxy group-containing polysulfide polymer (AA) are preferably located at a terminus of the epoxy group-containing polysulfide polymer (AA). With such an epoxy group-containing polysulfide polymer (AA), the resulting cured material tends to be highly stretchable. The sealant sheet disclosed herein may include, as the polysulfide polymer (A), an epoxy group-containing polysulfide polymer (AA) that has two or more epoxy groups at one terminus of the main chain; it may include an epoxy group-containing polysulfide polymer (AA) that has one, two or more epoxy groups at each terminus of the main chain; or it may include both of these. The epoxy group-containing polysulfide polymer (AA) having an epoxy group at one terminus of the main chain may have a non-epoxy functional group at a terminus different from the terminus having the epoxy group. The non-epoxy functional group can be, for instance, a thiol group, amino group, hydroxy group, etc. The sealant sheet disclosed herein preferably includes at least an epoxy group-containing polysulfide polymer (AA) having an epoxy group at each terminus of the main chain. With the inclusion of an epoxy group-containing polysulfide polymer (AA) having such a structure, the resulting cured material tends to combine well-balanced strength and stretchiness. For instance, it is preferable to use an epoxy group-containing polysulfide polymer (AA) having one epoxy group at each terminus of the main chain.

The epoxy group-containing polysulfide polymer (AA) can be obtained by allowing a thiol group-containing polysulfide as those described above to react with an epoxy compound having two or more epoxy groups per molecule, with epoxy groups in excess. The epoxy compound can be a bifunctional epoxy compound having two epoxy groups per molecule or a polyfunctional epoxy compound having three or more epoxy groups per molecule. As the epoxy compound, solely one species or a combination of two or more species can be used. From the standpoint of the ease of handling at the reaction with the thiol group-containing polysulfide, etc., in some embodiments, it is preferable to use an epoxy compound that exists as liquid at room temperature.

Examples of the bifunctional epoxy compound include, but are not limited to, bisphenol A epoxy resins, bisphenol F epoxy resins, hydrogenated bisphenol A epoxy resins (i.e., epoxy compounds corresponding to that in structure resulting from hydrogenation of bisphenol A epoxy resins to convert aromatic rings to cycloalkyl rings), hydrogenated F epoxy resins, biphenyl epoxy resins, aliphatic epoxy resins (e.g., polypropylene glycol-based epoxy resins, etc.), 1,6-hexanediol diglycidyl ether, and polyethylene glycol diglycidyl ether.

Examples of the polyfunctional epoxy compound include, but are not limited to, novolac-based epoxy resins, glycidyl amine-based epoxy resins, biphenyl-based epoxy resins, triphenylmethane-based epoxy resins, dicyclopentadiene-based epoxy resins, glycerin-based epoxy resins, trimethylol propane-based epoxy resins, N,N,N',N'-tetraglycidyl-m-xylenediamine, 1,3-bis(N,N-diglycidylaminomethyl)cyclohexane, and polyglycerol polyglycidyl ether. The number of epoxy groups in one molecule of the polyfunctional epoxy compound is at least 3 or greater, can be 4 or greater, or even 5 or greater. The number of epoxy groups in one molecule of the polyfunctional epoxy compound is usually suitably 10 or less, possibly 8 or less, or even 6 or less.

In some embodiments, as the epoxy compound, a bifunctional epoxy compound can be preferably used. The use of the bifunctional epoxy compound can be advantageous in obtaining a sealant sheet that gives a cured material showing suitable stretchiness. As the bifunctional epoxy compound, solely one species or a combination of two or more species can be used.

In some embodiments, as the bifunctional epoxy compound, it is preferable to use an epoxy compound having a five-membered or larger carbon ring structure in the molecule. With a sealant sheet formed using a bifunctional epoxy compound having such a structure, the resulting cured material tends to show high strength and good stretchiness. The five-membered or larger carbon ring structure can be, for instance, a benzene ring, naphthalene ring, cyclohexyl ring, etc. Examples of the epoxy compound including such a carbon ring structure include bisphenol A epoxy resins, bisphenol F epoxy resins, hydrogenated bisphenol A epoxy resins, hydrogenated bisphenol F epoxy resins, and biphenyl epoxy resins. In a preferable embodiment, as the bifunctional epoxy compound, a bisphenol F epoxy resin can be used.

As the epoxy compound, one, two or more species of polyfunctional epoxy compound can be used in combination with a bifunctional epoxy compound or in place of the bifunctional epoxy resin. The use of a polyfunctional epoxy resin may increase the strength of the cured material. The combined use of a bifunctional epoxy compound and a polyfunctional epoxy compound can bring about a sealant sheet that provides a cured material that combines strength and stretchiness at a high level.

In some embodiments, as the polyfunctional epoxy compound, it is possible to use a polyfunctional epoxy compound having an epoxy group-containing repeat unit (i.e., a polyfunctional epoxy polymer) and it is preferable to use, for instance, a novolac-based epoxy resin. Examples of the novolac-based epoxy resin include phenol novolac-based epoxy resins and o-cresol novolac-based epoxy resins. The use of a novolac-based epoxy resin may be advantageous in obtaining a sealant sheet that gives a cured material with high strength and good stretchiness. With the use of a novolac-based epoxy resin having a lower molecular weight, the stretchiness of the cured material tends to increase. For instance, it is preferable to use a phenol novolac-based epoxy resin that exists as liquid at room temperature.

When carrying out the reaction between the thiol group-containing polysulfide and the epoxy compound having two or more epoxy groups in one molecule, any of a suitable catalyst can be used as long as the effect obtainable by the art disclosed herein is not greatly impaired. For instance, a known base catalyst can be suitably selected and used, such as 2,4,6-triaminomethylphenol, triethylamine, and 1,8-diazabicyclo[5.4.0]undeca-7-ene.

For the reaction of the thiol group-containing polysulfide and the epoxy compound having two or more epoxy groups per molecule, when using a basic catalyst, its amount used is not particularly limited and can be selected to suitably obtain the catalytic activity. In some embodiments, relative to 100 parts by weight of the total amount of the thiol group-containing polysulfide and the epoxy compound having two or more epoxy groups per molecule, the amount of basic catalyst used can be, for instance, 1 part by weight or less; it is usually typically 0.5 part by weight or less, possibly 0.2 part by weight or less, 0.1 part by weight or less, or even 0.08 part by weight or less. From the standpoint of enhancing the storage properties of the sealant sheet, it is advantageous to not use the basic catalyst in large excess. From such a standpoint, the amount of basic catalyst used to 100 parts by weight of the total amount can be, for instance, 0.07 part by weight or less, 0.05 part by weight or less, 0.03 part by weight or less, or even 0.02 part by weight or less. The minimum amount of basic catalyst used to 100 parts by weight of the total amount is not particularly limited and it can be, for instance, 0.001 part by weight or greater, or even 0.005 part by weight or greater.

The reaction can proceed by mixing a thiol group-containing polysulfide and an epoxy compound having two or more epoxy groups in one molecule as well as a catalyst used as necessary in a suitable reaction vessel. In some preferable embodiments, a thiol group-containing polysulfide, a bifunctional epoxy compound, a polyfunctional epoxy compound and a catalyst (e.g., a basic catalyst) are mixed in a suitable reaction vessel. There are no particular limitations to the method for supplying the respective materials to the reaction vessel or the order of mixing them, and they can be selected to form a suitable reaction product. The reaction conditions can be suitably selected as long as the effect obtainable by the art disclosed herein is not greatly impaired. In some embodiments, the reaction can be carried out at a reaction temperature of, for instance, 0 °C to 120 °C, preferably 5 °C to 120 °C, or more preferably 10 °C to 120 °C. In view of the ease of controlling the reaction and the reaction efficiency, in some embodiments, the reaction temperature can be, for instance, 20 °C to 100 °C, 30 °C to 100 °C, 40 °C to 100 °C, or even 60 °C to 100 °C. The reaction time is not particularly limited and can be selected, for instance, in a range of 10 minutes to 720 hours (preferably 1 hour to 240 hours).

In some embodiments, the reaction is allowed to proceed by carrying out, in the following order, a first heating step performed at a temperature of, for instance, 60 °C to 120 °C (preferably 70 °C to 110 °C); and a second heating step performed at a temperature of 40 °C to 80 °C (preferably 50 °C to 70 °C). By carrying out the heating process in such a stepwise manner, it is possible to inhibit the polysulfide product from obtaining an excessively high elastic modulus and efficiently carry out the step of mixing (e.g., kneading) the reaction product and additives such as filler. The second heating step is preferably performed at a temperature lower than that of the first heating step. The heating time in the first heating step is, for instance, possibly 10 minutes or longer, usually suitably 30 minutes or longer, or also possibly 1 hour or longer. In a preferable embodiment, the heating time in the first heating step can be selected, for instance, from the range of 10 minutes to 24 hours (preferably 30 minutes to 12 hours, more preferably 1 hour to 6 hours). The heating time in the second heating step is, for instance, possibly 3 hours or longer, usually suitably 6 hours or longer, or also possibly 24 hours or longer. In a preferable embodiment, the heating time in the second heating step can be selected, for instance, from the range of 3 hours to 720 hours (preferably 48 hours to 500 hours, more preferably 72 hours to 300 hours). The heating time of the second heating step is preferably longer than that of the first heating step. It is noted that the heating process can be carried out stepwise, divided into three or more steps.

In the synthesis of epoxy group-containing polysulfide polymer (AA) by the reaction described above, the ratio between the thiol group-containing polysulfide and the epoxy compound used can be selected so that the ratio of the total number of epoxy groups in the epoxy compound to the total number of thiol groups in the thiol group-containing polysulfide, i.e., the equivalent weight ratio of epoxy groups/ thiol groups (or the epoxy/thiol ratio, hereinafter), has a value above 1. In some embodiments, the epoxy/thiol ratio value can be, for instance, 1.05 or greater, or even 1.1 or greater. From the standpoint of increasing the strength of the cured material, etc., in some embodiments, the epoxy/thiol ratio value can be, for instance, above 1.2, above 1.4, above 1.5, or even above 1.7. The epoxy/thiol ratio value can be, for instance, below 7.0, below 5.0, below 4.5, or even below 4.0. In some embodiments, from the standpoint of enhancing the stretchiness of the cured material, etc., the epoxy/thiol ratio value can be, for instance, below 3.5, below 3.2, below 3.0, below 2.5, below 2.0, or even below 1.8.

In the synthesis of the epoxy group-containing polysulfide polymer (AA) by the reaction described above, there are no particular limitations to the amount of the epoxy compound having two or more epoxy groups per molecule used. For instance, the epoxy compound can be used in an amount to obtain an aforementioned epoxy/thiol ratio value. In some embodiments, the amount of the epoxy compound used to 100 parts by weight of the thiol group-containing polysulfide is, for instance, possibly 1 part by weight or greater, usually suitably 3 parts by weight or greater, also possibly 5 parts by weight or greater, or even 7 parts by weight or greater. The amount of the epoxy compound used to 100 parts by weight of the thiol group-containing polysulfide is, for instance, possibly 50 parts by weight or less, usually suitably 30 parts by weight or less, also possibly 20 parts by weight or less, or even 15 parts by weight or less.

(Thiol group-containing polysulfide polymer (AB))

In a preferable embodiment, the sealant sheet disclosed herein comprises, as the polysulfide polymer (A), a thiol group-containing polysulfide polymer (AB) having two or more thiol groups per molecule and further comprises an allyl compound (C) having two or more allyl groups per molecule, and a photo-radical generator (D). The sealant sheet in such an embodiment may further include or may be free of a polysulfide polymer (A) that is not a thiol group-containing polysulfide polymer (AB). The sealant sheet in this embodiment may further include or may be free of a thiol compound (B) that is not a thiol group-containing polysulfide polymer (AB). When the thiol compound (B) is included, the sealant sheet disclosed herein comprises a thiol group-containing polysulfide polymer (AB) having two or more thiol groups per molecule as the polysulfide polymer (A), a thiol compound (B) having two or more thiol groups per molecule, an allyl compound (C) having two or more allyl groups per molecule, and a photo-radical generator (D).

The average thiol group count in the thiol group-containing polysulfide polymer (AB) is typically 2 or greater, or even greater than 2. The upper limit of the average thiol group count is not particularly limited. From the standpoint of the flexibility of the cured material, it is usually suitably 10 or less, possibly 7 or less, 5 or less, 4 or less, 3 or less, 2.8 or less, or even 2.4 or less.

The thiol groups in the thiol group-containing polysulfide polymer (AB) are preferably placed at a terminus of the thiol group-containing polysulfide polymer (AB). With such a thiol group-containing polysulfide polymer (AB), the resulting cured material tends to be highly stretchable. A preferable thiol group-containing polysulfide polymer (AB) has one, two or more thiol groups at each terminus of the main chain. A more preferable thiol group-containing polysulfide polymer (AB) has one thiol group at each terminus of the main chain. With the inclusion of a thiol group-containing polysulfide polymer (AB) having such a structure, the resulting cured material tends to combine well-balanced strength and stretchiness.

As the thiol group-containing polysulfide polymer (AB), it is possible to use, for instance, a species obtainable by allowing an aforementioned epoxy group-containing polysulfide polymer (AA) to react with a thiol compound having two or more thiol groups per molecule, with thiol groups in excess. The thiol compound can be a bifunctional thiol compound having two thiol groups per molecule or a polyfunctional thiol compound having three or more thiol groups per molecule. As the thiol compound, solely one species or a combination of two or more species can be used. From the standpoint of obtaining a sealant sheet that provides a favorably stretchable cured material, a bifunctional thiol compound can be preferably used. For instance, of the thiol compound allowed to react with the epoxy groups in the epoxy group-containing polysulfide polymer (AA), the bifunctional thiol compound can account for 50 % by weight or more, 70 % by weight or more, or 90 % by weight or more. A bifunctional thiol compound can be used solely as the thiol compound.

As the thiol compound allowed to react with the epoxy group-containing polysulfide polymer (AA), for instance, it is possible to use one, two or more species selected among the usable materials for the thiol compound (B) described later. The reaction between the epoxy group-containing polysulfide polymer (AA) and the thiol compound can be allowed to proceed in the same manner as for the reaction between a thiol group-containing polysulfide and an epoxy compound described earlier.

In the synthesis of thiol group-containing polysulfide polymer (AB) by the reaction described above, the ratio between the epoxy group-containing polysulfide and the thiol compound used can be selected so that the ratio of the total number of thiol groups in the thiol compound to the total number of epoxy groups in the epoxy group-containing polysulfide, i.e., the epoxy/thiol ratio, has a value below 1. From the standpoint of increasing the strength of the cured material, etc., in some embodiments, the epoxy/thiol ratio value can be, for instance, 0.95 or less, 0.9 or less, or even 0.85 or less. The epoxy/thiol ratio value is, for instance, possibly 0.1 or greater, or usually suitably 0.2 or greater. In some embodiments, from the standpoint of enhancing the stretchiness of the cured material, etc., the epoxy/thiol ratio value can be, for instance, 0.3 or greater, 0.5 or greater, 0.6 or greater, or even 0.7 or greater.

In the synthesis of the thiol group-containing polysulfide polymer (AB) by the reaction described above, there are no particular limitations to the amount of the thiol compound having two or more thiol groups per molecule used. For instance, the thiol compound can be used in an amount to obtain an aforementioned epoxy/thiol ratio value. In some embodiments, the amount of the thiol compound used to 100 parts by weight of the epoxy group-containing polysulfide is, for instance, possibly 1 part by weight or greater, usually suitably 3 parts by weight or greater, also possibly 5 parts by weight or greater, or even 7 parts by weight or greater. The amount of the thiol compound used to 100 parts by weight of the epoxy group-containing polysulfide is, for instance, possibly 50 parts by weight or less, usually suitably 30 parts by weight or less, also possibly 20 parts by weight or less, or even 15 parts by weight or less.

As the thiol group-containing polysulfide polymer (AB), for instance, it is also possible to use a thiol group-containing polysulfide (preferably a thiol-biterminated polysulfide) described earlier as the material that can be used as a precursor of polysulfide polymer (A).


< Thiol compound (B)>


As the thiol compound (B) in the sealant sheet disclosed herein, a compound having two or more thiol groups per molecule can be used without particular limitations. Examples include, but are not limited to, trimethylolpropane tris(thiopropionate) (or trimethylolpropane tris(3-mercaptopropionate)), pentaerythritol tetrakis(thiopropionate), ethylene glycol bisthioglycolate, 1,4-butanediol bisthioglycolate, trimethylolpropane tris(thioglycolate), pentaerythritol tetrakis(thioglycolate), di(2-mercaptoethyl) ether, 1,4-butanedithiol, 1,5-dimercapto-3-thiapentane, 1,8-dimercapto-3,6-dioxaoctane (synonym: 3,6-dioxa-1,8-octanedthiol), 1,3,5-trimercaptomethylbenzene, 4,4'-thiodibenzenethiol, 1,3,5-trimercaptomethyl-2,4,6-trimethylbenzene, 2,4, 6-trimercapto-s-triazine, 2 -dibutylamino-4, 6-dimercapto-s-triazine, pentaerythritol tetrakis(3-mercaptopropionate) and dipentaerythritol hexakis(3-mercaptopropionate).

Examples of commercial thiol compounds (B) include, but are not limited to, JER MATE QX11, QX12, JER CURE® QX30, QX40, QX60, QX900, and CAPCURE CP3-800 available from Mitsubishi Chemical Corporation; OTG, EGTG, TMTG, PETG, 3-MPA, TMTP and PETP available from Yodo Kagaku Co., Ltd.; TEMPIC, TMMP, PEMP, PEMP-II-20P and DPMP available from Sakai Chemical Industry Co., Ltd.; and Karenz MT® PE1, Karenz MT® BD1, Karenz MT®NR1, Karenz MT® TPMB and TEMB available from Showa Denko K. K. Among these compounds, each can be used alone or a mixture of two or more species can be used as well.

The average thiol group count of the thiol compound (B) in the sealant sheet can be, for instance, about 2 or greater and 10 or less. From the standpoint of the flexibility of the cured material, the average thiol group count can be, for instance, 7 or less, 5 or less, 4 or less, or even below 4. In some embodiments, the average thiol group count can be 3 or less, 2.5 or less, or even 2.2 or less. As the thiol compound (B), one, two or more species of bifunctional thiol compounds can be used solely. According to such an embodiment, the resulting sealant sheet is likely to provide a favorably stretchable cured material.

As the thiol compound (B), it is possible to use a compound having a primary thiol group (or a primary thiol compound), a compound having a secondary thiol group (a secondary thiol compound), or a compound having a tertiary thiol group (a tertiary thiol compound). From the standpoint of the curing properties when the sealant sheet is used, a primary thiol compound can be preferably used. From the standpoint of the storability of the sealant sheet prior to use, a secondary or higher thiol compound (i.e., a secondary thiol compound and/or a tertiary thiol compound) can be preferably used. It is noted that hereinafter, a thiol compound having two primary thiol groups per molecule may be referred to as a primary bifunctional thiol compound and a thiol compound having two secondary thiol groups per molecule may be referred to as a secondary bifunctional thiol compound.

In some embodiments, as the thiol compound (B), a primary thiol compound and a secondary or higher thiol compound (e.g., a secondary thiol compound) can be used together. According to such an embodiment, it is possible to favorably combine storability of the sealant sheet prior to use and curing properties upon its use. The weight ratio of the primary thiol compound in the total weight of the primary and secondary or higher thiol compounds is not particularly limited. It is, for instance, possibly 5 % by weight or higher, preferably 15 % by weight or higher, more preferably 25 % by weight or higher, or also possibly 35 % by weight or higher; and it is, for instance, possibly 95 % by weight or lower, preferably 75 % by weight or lower, also possibly 60 % by weight or lower, or even 45 % by weight or lower.

As the thiol compound (B), in view of the balance between the sealant sheet's storability prior to use and curing properties upon use, it is preferable to use a species having a thiol equivalent weight in the range of 45 g/eq or higher and 450 g/eq or lower. The thiol equivalence can be, for instance, 60 g/eq or higher, 70 g/eq or higher, 80 g/eq or higher; and it can be, for instance, 350 g/eq or lower, 250 g/eq or lower, 200 g/eq or lower, or even 150 g/eq or lower. With increasing thiol equivalent weight, the storability prior to use improves while the curing properties upon use tend to degrade. When using two or more species of thiol compounds (B), the sum of the products of the thiol equivalent weights and the weight fractions of the respective thiol compounds (B) is preferably in these ranges. It is noted that the thiol equivalent weight refers to the gram count (weight in gram) of a compound that includes one equivalent of thiol groups and can be determined by iodometry. Alternatively, nominal values given in a catalog, literature, etc., can be used as well.

<Allyl compound (C)>

As the allyl compound (C) in the sealant sheet disclosed herein, it is possible to use a compound having two or more allyl groups per molecule without particular limitations. While no particular limitations are imposed, as the allyl compound (C) disclosed herein, an allyl ether, allyl ester or the like can be preferably used. Examples of the allyl compound (C) disclosed herein include, but are not limited to, bifunctional allyl compounds such as diallyl phthalate, diallyl isophthalate, diallyl terephthalate, diallyl fumarate, diallyl adipate, diallyl hexahydrophthalate, and 1,3-diallyloxy-2-propanol; trifunctional allyl compounds such as triallyl isocyanurate, triallyl cyanurate, triallyl citrate, and triallyl trimellitate; and tetrafunctional allyl compounds such as pentaerythritol tetraallyl ether.

In the sealant sheet disclosed herein, the sealant sheet's allyl/thiol ratio (the ratio of the allyl equivalent weight to the thiol equivalent weight in the sealant sheet) is not particularly limited. The sealant sheet's allyl/thiol ratio can be, for instance, about 0.1 or higher and 10 or lower, 0.2 or higher and 5 or lower, 0.3 or higher and 3 or lower, or even 0.5 or higher and 2 or lower. When the allyl/thiol ratio is at or above an abovementioned lower limit and at or below an abovementioned upper limit, the resulting cured material tends to combine well-balanced strength and stretchiness. In some embodiments, the allyl/thiol ratio can be, for instance, 0.6 or higher, 0.7 or higher, or 0.8 or higher; and 1.7 or lower, 1.5 or lower, or even 1.2 or lower.

In the sealant sheet disclosed herein, the amount of the thiol compound (B) in the sealant sheet is not particularly limited. The amount of the thiol compound (B) in the sealant sheet can be selected, for instance, to obtain an aforementioned allyl/thiol ratio. In some embodiments, the amount of the thiol compound (B) that is not a thiol group-containing polysulfide polymer (AB) relative to 100 parts by weight of the polysulfide polymer (A) can be, for instance, 0.05 part by weight or greater, 0.1 part by weight or greater, 0.3 part by weight or greater, or even 0.5 part by weight or greater; and it can be, for instance, 10 parts by weight or less, 5 parts by weight or less, 3 parts by weight or less, or even 2 parts by weight or less.

In the sealant sheet disclosed herein, the amount of the allyl compound (C) therein is not particularly limited. For instance, the amount of the allyl compound (C) in the sealant sheet can be selected so as to obtain an aforementioned allyl/thiol ratio. In some embodiments, the amount of the allyl compound (C) relative to 100 parts by weight of the polysulfide polymer (A) can be, for instance, 0.05 part by weight or greater, 0.1 part by weight or greater, 0.3 part by weight or greater, or even 0.5 part by weight or greater; and, for instance, 10 parts by weight or less, 5 parts by weight or less, 3 parts by weight or less, or even 2 parts by weight or less.

<Photo-radical generator (D)>

As the photo-radical generator (D), a species that generates radicals by photoirradiation is used. In some preferable embodiments, the photo-radical generator (D) is an intramolecular cleavable photoinitiator. Examples of the photo-radical generator (D) include alkyl phenone-based photopolymerization initiators, acyl phosphine oxide-based photopolymerization initiators, titanocene compound-based photopolymerization initiators, acetophenone-based photopolymerization initiators, and benzoin ether-based photopolymerization initiators. For the photo-radical generator, solely one species or a combination of two or more species can be used.

Specific examples of alkyl phenome-based photopolymerization initiators include 2-methyl-1-[4-(methylthio)phenyl]-2-morpholinopropane-1-one (e.g., product name ONINIRAD 907 available from IGM Resins) and 2,2-dimethoxy-2-phenylacetophenone (e.g., product name OMNIRAD 651 available from IGM Resins).

Specific examples of acyl phosphine oxide-based photopolymerization initiators include bis(2,4,6-trimethylbenzoyl)phenylphosphine oxide (e.g., product name IRGACURE 819 available from BASF Corporation), bis(2,4,6-trimethylbenzoyl)-2,4-di-n-butoxyphenylphosphine oxide, 2,4,6-trimethylbenzoyldiphenylphosphine oxide (e.g., product name LUCIRIN TPO available from BASF Corporation), and bis(2,6-dimethoxybenzoyl)-2,4,4-trimethylpentylphosphine oxide.

Specific examples of titanocene compound-based photopolymerization initiators include Bis(2,4-cyclopentadienyl)bis[2,6-difluoro-3-(1-pyrryl)phenyl] titanium(IV) (e.g., product name IRGACURE 784 available from BASF Corporation).

Specific examples of acetophenone-based photopolymerization initiators include 1-hydroxycyclohexyl-phenyl-ketone (e.g., product name IRGACURE 184 available from BASF Corporation), 4-phenoxydichloroacetophenone, 4-t-butyl-dichloroacetophenone, 1-[4-(2-hydroxyethoxy)-phenyl]-2-hydroxy-2-methyl-1-propane-1-one (e.g., product name IRGACURE 2959 available from BASF Corporation), and 2-hydroxy-2-methyl-1-phenyl-propane-1-one (e.g., product name DAROCUR 1173 available from BASF Corporation), and methoxyacetophenone.

Specific examples of benzoin ether-based photopolymerization initiators include benzoin ethers such as benzoin methyl ether, benzoin ethyl ether, benzoin propyl ether, benzoin isopropyl ether, and benzoin isobutyl ether; and substituted benzoin ethers such as anisole methyl ether.

Among these, alkyl phenome-based photopolymerization initiator, acyl phosphine oxide-based photopolymerization initiator and titanocene compound-based photopolymerization initiator are preferable because radicals generated by photoirradiation can effectively promote the radical addition reaction between thiol groups and allyl groups.

The amount of the photo-radical generator (D) can be selected so as to obtain desirable effect of use. In some embodiments, the photo-radical generator (D) can be used in an amount of, for instance, 0.01 part by weight or greater for every 100 parts by weight of the total amount of the polysulfide polymer (A), thiol compound (B) and allyl compound (C). From the standpoint of enhancing the curing properties of the sealant sheet, it is preferably 0.1 part by weight or greater, possibly 0.5 part by weight or greater, 1 part by weight or greater, or even 1.5 part by weight or greater. From the standpoint of raw material cost, etc., in typical, the amount of the photo-radical generator (D) used per 100 parts by weight of the total amount is preferably 10 parts by weight or less, more preferably 7 parts by weight or less, possibly 5 parts by weight or less, 4 parts by weight or less, 3 parts by weight or less, or even 2.5 parts by weight or less.

<Photosensitizer>

The sealant sheet disclosed herein may include a sensitizer. The use of the sensitizer can increase the utilization efficiency of the irradiated light and improve the sensitivity of the photo-radical generator (D). As a photosensitizer, a suitable species can be selected and used among known materials. Non-limiting examples of the photosensitizer include benzophenone and benzophenone derivatives such as 4-methylbenzophenone, 3-benzoylbiphenyl, 4-(4-methylphenylthio)benzophenone, methyl 2-benzoyl benzoate, 4-phenylbenzophenone, 4,4'-bis(dimethoxy)benzophenone, 4,4'-bis(dimethylamino)benzophenone, 4,4'-bis(diethylamino)benzophenone, methyl-2-benzoylbenzoate, 2-methylbenzophenone, 3-methylbenzophenone, 3,3'-dimethyl-4-methoxybenzophenone and 2,4,6-trimethylbenzophenone; thioxanthone and thioxanthone derivatives such as 2-Chlorothioxanthone, 4-chlorothioxanthone, 2-isopropylthioxanthone, 4-isopropylthioxanthone, 2,4-dimethylthioxanthone, 2,4-diethylthioxanthone, 1-chloro-4-propoxythioxanthone and 2,4-diethylthioxanthen-9-one; fluorene-based compounds such as 2-hydroxy-9-fluorene; anthrone and anthrone derivatives such as dibenzosuberone and 2-amino-9-fluorene; anthraquinone and anthraquinone derivatives such as 2-ethylanthraquinone, 2-hydroxyanthraquinone and 2-aminoanthraquinone; naphthalene derivatives such as 1-methylnaphthalene, 2-methylnaphthalene, 1-fluoronaphthalene, 1-chloronaphthalene, 2-chloronaphthalene, 1-bromonaphthalene, 2-bromonaphthalene, 1-iodonaphthalene, 2-iodonaphthalene, 1-naphthol, 2- naphthol, 1-methoxynaphthalene, 2-methoxynaphthalene, 1,4-dicyanonaphthalene and methyl3-hydroxy-2- naphthol; anthracene and anthracene derivatives such as 1,2-benzanthracene, 9,10-dichloroanthracene, 9,10-dibromoanthracene, 9,10-diphenyl anthracene, 9-cyanoanthracene, 9,10-dicyanoanthracene and 2,6,9,10-tetracyanoanthracene; nitro compounds such as nitrobenzoate and nitroaniline; and various pigments; but it is not limited to these.

When using a photosensitizer, it can be used in an amount selected to obtain a desirable sensitizing effect. When the sealant sheet includes a thiol compound (B) and an allyl compound (C), for every 100 parts by weight of the total amount of thiol compound (B) and allyl compound (C), the amount of photosensitizer can be, for instance, 0.001 part by weight or greater, 0.005 part by weight or greater, 0.01 part by weight or greater, or even 0.05 part by weight or greater. When the sealant sheet is free of a thiol compound that is not a thiol group-containing polysulfide polymer (AB), relative to 100 parts by weight of the allyl compound (C), the amount of photosensitizer can be, for instance, 0.002 part by weight or greater, 0.01 part by weight or greater, 0.02 part by weight or greater, or even 0.1 part by weight or greater. The maximum amount of photosensitizer is not particularly limited. From the standpoint of the storability of the sealant sheet, when the sealant sheet includes a thiol compound (B) and an allyl compound (C), relative to 100 parts by weight of the total amount of the thiol compound (B) and allyl compound (C), it is usually suitably 10 parts by weight or less, possibly 5 parts by weight or less, 1 part by weight or less, 0.5 part by weight or less, or even 0.3 part by weight or less. When the sealant sheet is free of a thiol compound that is not a thiol group-containing polysulfide polymer (AB), relative to 100 parts by weight of the allyl compound (C), the amount of photosensitizer is usually suitably 20 parts by weight or less, possibly 10 parts by weight or less, 2 parts by weight or less, 1 part by weight or less, or even 0.6 part by weight or less. In a preferable embodiment, the sealant sheet disclosed herein is free of a photosensitizer.

<Storage stabilizer>

The sealant sheet disclosed herein may further include an optional compound that is useful in inhibiting the radical addition reaction of thiol and allyl groups as far as other physical properties are not greatly impaired. The use of such a compound can enhance the storability of the sealant sheet prior to use. Examples of storage stabilizer include organic acids, inorganic acids as well as oligomers, polymers, borates and phosphates having acidic groups in the molecules, with them being liquids or solids at room temperature and possibly having non-acidic functional groups. Examples include, but are not limited to, sulfuric acid, acetic acid, adipic acid, tartaric acid, fumaric acid, barbituric acid, boric acid, pyrogallol, phenol resin and a carboxylic acid anhydride. For the storage stabilizer, solely one species or a combination of two or more species can be used. The amount of storage stabilizer used is not particularly limited and can be selected to obtain desirable effects.

Favorable examples of the storage stabilizer include boric acid esters and phosphoric acid esters.

Boric acid esters are liquids or solids at room temperature. Examples include, but are not limited to, trimethyl borate, triethyl borate, tri-n-propyl borate, triisopropyl borate, tri-n-butyl borate, tripentyl borate, triallyl borate, trihexyl borate, tricyclohexyl borate, trioctyl borate, trinonyl borate, tridecyl borate, tridodecyl borate, trihexadecyl borate, trioctadecyl borate, tris(2-ethylhexyloxy)borane, bis(1,4,7,10-tetraoxaundecyl)(1,4,7,10,13-pentaoxatetradecyl)(1,4,7trioxaundecyl)borane, tribenzyl borate, triphenyl borate, tri-o-tolyl borate, tri-m-tolyl borate and triethanolamine borate.

Phosphoric acid esters include, but are not limited to, ethyl phosphate, butyl phosphate, propyl phosphate, 2-ethylhexyl phosphate, dibutyl phosphate, di-(2-ethylhexyl) phosphate, oleyl phosphate and ethyl diethyl phosphate. In a preferable embodiment, the sealant sheet disclosed herein is free of a storage stabilizer.

<Filler>

To the sealant sheet disclosed herein, a filler can be added as necessary. This may improve either one or both between the breaking strength and the elongation at break of the cured material. The filler may be useful in adjusting the storage modulus of the sealant sheet. With the filler suitably used, the shape-holding properties and ease of processing of the sealant sheet may be improved. The filler used is not particularly limited. Any of a suitable filler can be used as long as the effect obtainable by the art disclosed herein is not greatly impaired. As the filler, solely one species or a combination of two or more species can be used.

Examples of the material forming the filler include, but are not limited to, talc, silica, glass, carbon black, alumina, clay, mica, aluminum hydroxide, magnesium hydroxide, calcium carbonate, magnesium carbonate, barium sulfate, titanium dioxide, barium titanate, strontium titanate, calcium titanate, magnesium titanate, bismuth titanate, boron nitride, aluminum borate, barium zirconate and calcium zirconate. Particularly preferable examples include talc, silica, glass and calcium carbonate.

The amount of filler to be included is not particularly limited and can be selected to obtain favorable properties. The filler content can be, for instance, 1 % by weight or more of the entire sealant sheet, or also 5 % by weight or more. From the standpoint of obtaining greater effect of the use, it can be 10 % by weight or more, 15 % by weight or more, 20 % by weight or more, or even 25 % by weight or more. The filler content can be, for instance, below 50 % by weight of the entire sealant sheet. From the standpoint of the ease of forming the sheet shape and increasing the stretchiness of the cured material, it is usually suitably below 40 % by weight, or possibly even below 35 % by weight. In some embodiments, the filler content can be below 30 % by weight, or even below 25 % by weight.

The mean particle diameter of the filler is not particularly limited. The mean particle diameter is usually suitably 100 $\mu$m or less, or preferably 50 $\mu$m or less. A smaller mean particle diameter tends to bring a greater effect in improving either or both between the breaking strength and the elongation at break of the cured material. In some embodiments, the filler may have a mean particle diameter of, for instance, 30 $\mu$m or less, 20 $\mu$m or less, 15 $\mu$m or less, 10 $\mu$m or less, or even 5 $\mu$m or less. The filler's mean particle diameter can be, for instance, 0.1 $\mu$m or greater, 0.2 $\mu$m or greater, 0.5 $\mu$m or greater, or even 1 $\mu$m or greater. From the standpoint of the handling properties and dispersibility of the filler, it may be advantageous that the mean particle diameter is not excessively small.

As used herein, the mean particle diameter of the filler refers to the 50th percentile particle diameter by volume (50 % median diameter) in a size distribution obtained by laser scattering/diffraction method analysis.

In some embodiments, a filler formed of a material having a refractive index in the range of 1.56 or higher below 1.62 can be used. For instance, a glass filler having a refractive index in this range can be used. The refractive index range is exactly or approximately equal to the refractive index (typically about 1.60) of polysulfide polymer (A). Thus, with a filler having a refractive index in the range, the decrease in transmittance of the sealant sheet due to the filler content tends to be smaller as compared with a filler having a refractive index outside the range. With the sealant sheet having a certain level of transmittance, the sealed area is easily observed through the sealant sheet. This can be advantageous also from the standpoint of the ease of placement, etc., when placing the sealant sheet in a designated area. The sealant sheet disclosed herein may have a transmittance, for instance, above 5 %, above 10 %, above 15 %, or even above 20 %. The maximum transmittance is not particularly limited. The transmittance of the sealant sheet disclosed herein can be 100 %. From the standpoint of the practicality, it can be 80 % or lower, 60 % or lower, or even 40 % or lower. The sealant sheet disclosed herein can be preferably made in an embodiment where the transmittance is 30 % or lower, 20 % or lower, or even 15 % or lower. Here, the transmittance of the sealant sheet can be determined by measuring the spectrum of the sealant sheet 0.2 mm in thickness using a UV-vis spectrum measuring device (UV-2550 available from Shimadzu Corporation) or its equivalent. For instance, the transmittance at a wavelength of 365 nm can be used.

In the sealant sheet disclosed herein, it is possible to use a filler (e.g., glass filler) having a refractive index in the range of 1.56 or higher below 1.62 and a filler (e.g., talc) having a refractive index outside the range together. The ratio of the filler having a refractive index in the range to the total amount of the filler(s) in the sealant sheet is, for instance, possibly 10 % by weight or higher, also 25 % by weight or higher, preferably 45 % by weight or higher, yet also possibly 60 % by weight or higher, or 85 % by weight or higher; or it can be even 100 %. In some embodiments, it is preferable to use a filler formed of a material having a refractive index in the range of 1.56 or higher and 1.61 or lower or in the range of 1.57 or higher and 1.60 or lower. The refractive index can be determined, using generally known techniques such as minimum deviation, critical angle and V-block methods. The measurement can be performed using, for instance, a multi-wavelength Abbe refractometer DR-M4 (available from ATAGO Co., Ltd.). Alternatively, nominal values given in a catalog, literature, etc., can be used as well.

The sealant sheet disclosed herein may include other optional components as long as the effect obtainable by the art disclosed herein is not greatly impaired. Examples of such optional components include, but are not limited to, colorants such as dyes and pigments, dispersing agent, plasticizer, softener, flame retardant, anti-aging agent, UV absorber, antioxidant, and photo-stabilizer.

The sealant sheet disclosed herein may include other polymer or oligomer (or optional polymer, hereinafter) besides those described above, for instance, to increase the tightness of adhesion to the target area to be sealed, etc. From the standpoint of the oil resistance of the cured material, the optional polymer content is preferably 10 parts by weight or less, more preferably 5 parts by weight or less, or yet more preferably 1 part by weight or less, relative to 100 parts by weight of the polysulfide polymer (A). The sealant sheet may be essentially free of such an optional polymer. In this description, being essentially free of a certain component means that the component is not included at least intentionally, unless otherwise noted.

In the sealant sheet disclosed herein, the organic solvent content thereof can be, for instance, 5 % by weight or less, 2 % by weight or less, 1 % by weight or less, or even 0.5 % by weight or less; or it can be essentially free of an organic solvent. The organic solvent content can be 0 %. The organic solvent refers to a component that is not supposed to react with other components (especially the epoxy group-containing polysulfide or a curing agent possibly used as necessary) in the sealant sheet, such as toluene, cyclohexanone and trichloroethane.

The sealant sheet disclosed herein may comprise a thiol compound (B) (or a lower thiol compound, hereinafter) having a Mw of 1000 or lower, preferably 600 or lower, or more preferably 400 or lower. Of the total amount of the entire thiol compound (B) and the polysulfide polymer (AA), the amount by weight of the lower thiol compound can be, for instance, 0.1 % by weight or greater, 0.3 % by weight or greater, or even 0.5 % by weight or greater. The lower thiol compound may serve to increase the tack of the sealant sheet disclosed herein. When the tack of the sealant sheet is increased, for instance, the sealant sheet placed in a target area to be sealed may show greater temporary fixing properties to the target area. The temporary fixing properties refer to properties that inhibit the sealant sheet from lifting off or shifting in position from the target area to be sealed until the sealant sheet placed in the target area cures. Upon photoirradiation, the lower thiol compound reacts to be incorporated into the cured material. In some embodiments, of the total amount of the entire thiol compound (B) and the polysulfide polymer (A), the amount by weight of the lower thiol compound can be below 0.1 % by weight, below 0.05 % by weight, or even essentially none. Even in such an embodiment, the sealant sheet disclosed herein has surface tack and can be temporarily fixed to an area to be sealed.

<Release liner>

A release liner can be used during preparation (e.g., sheet formation) of the sealant sheet disclosed herein, storage distribution, shaping, placement in a target area to be sealed, etc. of the sealant sheet prior to use. The release liner is not particularly limited. For instance, it is possible to use a release liner having a release face on the surface of a liner substrate such as resin film, paper and the like; or a release liner formed from a low-adhesive material such as fluoropolymer (tetrafluoroethylene, etc.) and polyolefinic resin (polyethylene, polypropylene, etc.). The release face may be formed, for instance, subjecting the liner substrate to a surface treatment with a release agent such as silicone-based, long-chain alkyl based, fluorine-based release agents and molybdenum sulfide.

<Method for producing sealant sheet>

Described below are embodiments of the sealant sheet production method disclosed herein. It is noted that the following description is for illustration purposes and does not limit the method for producing the sealant sheet disclosed herein. For instance, for the convenience of description, embodiments using fillers are described below; however, the sealant sheet disclosed herein is not to be limited to filler-containing embodiments.

In a preferable embodiment, the sealant sheet disclosed herein comprises a polysulfide polymer (A), a thiol compound (B) (e.g., an aforementioned lower thiol compound), and an allyl compound (C) together. The sealant sheet having such a composition can be produced, for instance, by a method that comprises obtaining a polysulfide polymer (A); adding and mixing a thiol compound (B), an allyl compound (C), a photo-radical generator (D) and a filler with the polysulfide polymer (A); and molding the resulting mixture into a sheet shape. When the polysulfide polymer (A) is a reaction product of a thiol group-containing polysulfide, a bifunctional epoxy compound and a polyfunctional epoxy compound, the step of obtaining the mixture may include, in the following order, preparing the reaction product of the thiol group-containing polysulfide, the bifunctional epoxy compound and the polyfunctional epoxy compound; and adding and mixing a thiol compound (B), an allyl compound (C), a photo-radical generator (D) and a filler with the reaction product. Alternatively, the filler can be mixed together when preparing the reaction product.

With respect to the preparation of the reaction product, the description regarding the reaction between the thiol group-containing polysulfide and the epoxy compound having two or more epoxy group in one molecule may apply. Thus, a redundant description is omitted. As for a system that can be used for mixing the reaction product and the additives (the thiol compound (B), allyl compound (C), photo-radical generator (D) and filler in the example described above), examples include, but are not limited to, sealed mixing machines or batch mixing machines such as Banbury mixer, kneader, two-roller mill and three-roller mill; and continuous mixing machines such as single screw extruder and two-screw extruder.

As the method for molding the mixture into a sheet, a single method or a combination of methods can be employed among known sheet forming methods such as press-molding, calender molding and hot-melt extrusion. The press-molding can be normal pressing or vacuum pressing. From the standpoint of preventing the sheet from trapping air bubbles and inhibiting thermal denaturation of the mixture, in some embodiments, vacuum pressing or calender molding can be preferably applied. The resulting sealant sheet can be subjected to, for instance in a form of the release-lined sealant sheet as shown in Fig. 1 or Fig. 2, storage, processing (e.g., slit processing into a prescribed width, processing a roll into flat sheets, punching out prescribed shapes, etc.), transportation, etc.

In a preferable embodiment, the sealant sheet disclosed herein comprises a thiol group-containing polysulfide polymer (AB) and an allyl compound (C) together. The sealant sheet having such a composition can be produced, for instance, by a method that comprises obtaining a thiol group-containing polysulfide polymer (AB); adding and mixing an allyl compound (C), a photo-radical generator (D) and a filler with the thiol group-containing polysulfide polymer (AB); and molding the resulting mixture into a sheet. When the thiol group-containing polysulfide polymer (AB) is a thiol modification product of an epoxy group-containing polysulfide polymer, the step of obtaining the mixture may include, in the following order, preparing the thiol group-containing polysulfide polymer (AB) by allowing thiol groups of a compound having two or more thiol groups per molecule to react with epoxy groups of the epoxy group-containing polysulfide polymer; and adding and mixing an allyl compound (C), a photo-radical generator (D) and a filler with the thiol group-containing polysulfide polymer (AB). Alternatively, the filler can be mixed together when preparing the reaction product.

<Applications (usages)>

There are no particular limitations to the material of the area to be sealed with the sealant sheet disclosed herein. The material can be, for instance, a metal, a resin, a composite material of these, etc. More specific examples include metal and metalloid materials such as iron, iron alloys (carbon steel, stainless steel, chromium steel, nickel steel, etc.), aluminum, aluminum alloys, nickel, tungsten, copper, copper alloys, titanium, titanium alloys and silicon; resin materials such as polyolefin resins, polycarbonate resins, acrylic resins, and acrylonitrile resins (PAN); ceramic materials such as alumina, silica, sapphire, silicon nitride, tantalum nitride, titanium carbide, silicon carbide, gallium nitride, and plaster; glass materials such as aluminosilicate glass, soda lime glass, soda aluminosilicate glass, and quartz glass; and laminates and composites of these. Favorable examples of the metal and metalloid materials include light metals such as aluminum and titanium as well as alloys comprising the light metals as primary components. Examples of an aluminum alloy include duralumin (e.g., duralumin A2024, duraluminA2017, etc.). Examples of the composites include carbon fiber reinforced plastic (CFRP) and glass fiber reinforced plastic (FRP).

The sealant sheet exists as anon-liquid (i.e., solid) sheet in a temperature range around 25 °C; and therefore, unlike a liquid sealant, it is unnecessary for a worker to control the thickness when placing it in a target area to be sealed. In addition, unlike a liquid sealant, the sealant sheet can be pre-cut to fit a desired external form and placed in the target area to be sealed (typically adhered with the tack of the sealant sheet). Alternatively, the sealant sheet in a roll form can be applied to the target area while unwinding the roll and the remaining sealant sheet can be cut off. The use of the sealant sheet disclosed herein can fundamentally solve problems arising during liquid sealant application such as dripping, uneven application and excess spreading, significantly reducing the working time.

In the sealant sheet disclosed herein, upon photoirradiation, radicals are generated from the photo-radical generator (D) and promote the radical addition reaction between thiol groups and allyl groups in the sealant sheet, whereby the sheet undergoes curing. Photoirradiation can be performed, using a suitable known light source, for instance, a chemical lamp, a blacklight (e.g., a blacklight available from Toshiba Lighting & Technology Corporation) and a metal halide lamp. In some embodiments, a light source having a spectral power distribution in the wavelength range from 250 nm to 450 nm can be preferably used. A sensitizer can be included in the sealant sheet to increase the utilization efficiency of the light irradiated by the light source. For instance, when using a light source having a spectral power distribution in the wavelength range from 350 nm to 450 nm, the use of sensitizer is especially effective.

The sealant sheet disclosed herein can be used in an embodiment where photoirradiation is performed with the sheet placed in an area to be sealed. The radical addition reaction (thiol-ene reaction) between thiol groups and allyl groups proceeds quickly as compared with anionic polymerization and the like; and therefore, the sealant sheet disclosed herein tends to rapidly cure after photoirradiation. According to the art disclosed herein, even with a sealant sheet that cures in a shorter time than the time it takes to sufficiently release air bubbles outside the sealant after photoirradiation, the formation and growth of air bubbles are inhibited. Therefore, it is suitable for applications that require short sealing time and high sealing quality.

The cured material formed from the sealant sheet disclosed herein or the cured sealant has a tensile strength at break of suitably 0.7 MPa or greater, preferably 0.9 MPa or greater, more preferably greater than 1.0 MPa, possibly 1.1 MPa or greater, or even 1.15 MPa or greater. In some embodiments, the tensile strength at break can be 1.2 MPa or greater, or even 1.3 MPa or greater. The maximum tensile strength at break is not particularly limited. From the standpoint of readily obtaining other physical properties in combination, it can be, for instance, 3 MPa or less.

The cured material formed from the sealant sheet disclosed herein or the cured sealant has an elongation at break of suitably 100 %, preferably 120 % or greater, possibly 150 % or greater, 200 % or greater, or even 250 % or greater. The maximum elongation at break is not particularly limited. From the standpoint of readily obtaining other physical properties in combination, it can be, for instance, 600 % or less, or even 400 % or less.

The tensile strength at break and elongation at break are determined by the next method.

(Measurement of tensile strength at break and elongation at break)

Using a blacklight available from Toshiba Lighting & Technology Corporation, one side of a 0.2 mm thick sealant sheet is subjected to photoirradiation at 2000 mJ/cm$^2$. The irradiated sealant sheet is stored in an environment at 25 °C for 14 days. The resulting cured material (cured sealant) is then cut into a 10 mm wide, 50 mm long rectangle to prepare a sample piece. The sample piece is clamped in the chuck of a tensile tester at a chuck distance of 20 mm. Based on JIS K6767, the sample piece is stretched at a rate of 50 mm/min and the maximum strength observed before the sample piece breaks is recorded as the tensile strength at break. From the chuck distance at break (L1) at which the sample broke and the initial chuck distance (L0) at the start of stretching, the elongation at break is determined by the next equation:

$$\text{Elongation at break (\%)} = ((L1 - L0)/L0) \times 100$$

The matters disclosed in this description include the following:

(1) A sealant sheet formed in a sheet shape, the sealant sheet comprising the following components:

a polysulfide polymer (A),
a thiol compound (B) having two or more thiol groups per molecule,
an allyl compound (C) having two or more allyl groups per molecule, and
a photo-radical generator (D)

(2) The sealant sheet according to (1) above, comprising, as the polysulfide polymer (A), an epoxy group-containing polysulfide polymer (AA) having two or more epoxy groups per molecule.
(3) The sealant sheet according to (2) above, wherein the epoxy group-containing polysulfide polymer (AA) is an epoxy-bi-terminated polysulfide polymer.
(4) The sealant sheet according to (2) or (3) above, wherein the epoxy group-containing polysulfide polymer (AA) is a reaction product of a thiol-bi-terminated polysulfide having a disulfide structure in its main chain and having a Mw of 500 to 10000, and an epoxy compound having two or more epoxy groups per molecule.
(5) The sealant sheet according to (4) above, wherein the epoxy compound comprises a bifunctional epoxy compound.
(6) The sealant sheet according to (5) above, comprising, as the bifunctional epoxy compound, an epoxy compound having a five-membered or larger carbon ring structure in its molecule.
(7) The sealant sheet according to any of (4) to (6) above, wherein the epoxy compound comprises a trifunctional or higher polyfunctional epoxy compound.
(8) The sealant sheet according to (7) above, comprising a novolac epoxy resin as the polyfunctional epoxy compound.
(9) The sealant sheet according to any of (1) to (8) above, comprising, as the polysulfide polymer (A), a thiol group-containing polysulfide polymer (AB) having two or more thiol groups.
(10) The sealant sheet according to (9) above, wherein the thiol group-containing polysulfide polymer (AB) is a thiol-bi-terminated polysulfide polymer.
(11) The sealant sheet according to (9) or (10) above, wherein the thiol group-containing polysulfide polymer (AB) is a reaction product of an epoxy-bi-terminated polysulfide having a disulfide structure in its main chain and having a Mw of 500 to 10000, and a thiol compound having two or more thiol groups per molecule.
(12) The sealant sheet according to any of (1) to (11) above, wherein the thiol compound (B) has a thiol equivalent weight of 45 g/eq or higher and 450 g/eq or lower.
(13) The sealant sheet according to any of (1) to (12) above, wherein the allyl compound (C) is at least one species selected from the group consisting of bifunctional allyl compounds and trifunctional allyl compounds.
(14) The sealant sheet according to any of (1) to (13) above, wherein the photo-radical generator (D) is at least one species selected from the group consisting of an alkyl phenome-based photopolymerization initiator, an acyl phosphine oxide-based photopolymerization initiator, and a titanocene compound-based photopolymerization initiator.
(15) The sealant sheet according to any of (1) to (14) above, further comprising a filler.
(16) The sealant sheet according to (15) above, wherein the filler content is 1 % by weight or more and less than 40 % by weight of the entire sealant sheet.
(17) The sealant sheet according to (15) or (16), wherein the filler has a mean particle diameter of 0.1 μm or greater and 30 μm or less.
(18) The sealant sheet according to any of (1) to (17) above, having a storage modulus of 0.005 MPa or greater and 0.8 MPa or less at 25 °C.
(19) The sealant sheet according to any of (1) to (18) above, having a thickness of 0.01 mm or greater and 10 mm or less.
(20) A sealant sheet formed in a sheet shape, the sealant sheet comprising the following components:

a thiol group-containing polysulfide polymer (AB) having two or more thiol groups,
an allyl compound (C) having two or more allyl groups per molecule, and a photo-radical generator (D)

(21) A release-lined sealant sheet comprising the sealant sheet according to any of (1) to (20) above and a release liner having a release face in contact with at least one face of the sealant sheet.

(22) A method for producing a sealant sheet, the method comprising:

obtaining a polysulfide polymer (A);

adding and mixing a thiol compound (B) having two or more thiol groups per molecule, an allyl compound (C) having two or more allyl groups per molecule, a photo-radical generator (D) and a filler with the polysulfide polymer (A); and

molding the resulting mixture into a sheet shape.

(23) A method for producing a sealant sheet, the method comprising:

obtaining a thiol group-containing polysulfide polymer (AB) having two or more thiol groups per molecule;

adding and mixing an allyl compound (C) having two or more allyl groups per molecule, a photo-radical generator (D) and a filler with the thiol group-containing polysulfide polymer (AB); and molding the resulting mixture into a sheet shape.

(24) A method for applying a sealing, the method comprising

obtaining the sealant sheet according to any of (1) to (20) above,

adhering the sealant sheet to an article to be sealed, and

allowing the sealant sheet to cure on the article to be sealed to form a cured sealant;

wherein the sealant sheet is subjected to photoirradiation immediately before the sealant sheet is applied to the article to be sealed and/or after the sealant sheet is applied to the article to be sealed.

[Examples]

Several working examples related to the present invention are described below, but the present invention is not limited to these examples. In the description below, "parts" are by weight unless otherwise specified.

(Example 1)

<Preparation of epoxy-bi-terminated polysulfide polymer>

Using a reaction vessel equipped with a stirrer, while stirring, were heated the followings at 90 °C for 3 hours: 90 parts of a liquid polysulfide polymer (thiol-biterminated polysulfide polymer), 7.5 parts of a bifunctional epoxy compound, 2 parts of a polyfunctional epoxy compound and 0.08 part of a basic catalyst shown in Table 1. By this, was synthesized an epoxy-bi-terminated polysulfide.

Here, were used product name THIOKOL LP-55 (Mw 4000, thiol equivalent weight 2000 g/eq) available from Toray Fine Chemicals Co., Ltd. as the liquid polysulfide polymer (thiol-bi-terminated polysulfide polymer); bisphenol F epoxy resin (product name jER806, epoxy equivalent weight 169 g/eq) available from Mitsubishi Chemical as the bifunctional epoxy compound; phenol novolac epoxy resin (product name jER152, epoxy equivalent weight 177 g/eq) available from Mitsubishi Chemical as the polyfunctional epoxy compound; and 2,4,6-triaminomethyl-phenol available from Tokyo Chemical Industry as the basic catalyst.

<Preparation of sealant sheet>

The reaction mixture was removed from the vessel and was allowed to cool to room temperature. Subsequently, for every 50 parts of the epoxy-bi-terminated polysulfide polymer, were added 0.5 part of a bifunctional secondary thiol compound, 0.6 part of a trifunctional allyl compound, 1.0 part of a photo-radical generator A as well as 20 parts of talc as the filler, shown in Table 1. The resulting mixture was evenly kneaded, using a two-roll mill. Using a vacuum presser, the resulting mixture was shaped into sheets to obtain sealant sheets according to this Example. Here, were prepared two kinds, a 0.2 mm thick sheet and a 1 mm thick sheet.

The sealant sheet according to this Example had an allyl/thiol ratio value of 1.0. In other words, the total number of thiol groups (unreacted) in the epoxy-bi-terminated polysulfide polymer used for preparing the sealant sheet according to this Example and thiol groups (unreacted) in the bifunctional secondary thiol compound added to the polymer was about the same as the number of allyl groups (unreacted) in the trifunctional allyl compound added to the polymer. The number of thiol groups in the epoxy-bi-terminated polysulfide polymer is determined by subtracting the epoxy group count $N_E$ (calculated from the epoxy equivalent weights and the amounts of the respective bifunctional and polyfunctional epoxy compounds used) from the thiol group count $N_T$ (calculated from the thiol equivalent weight and the amount of the liquid polysulfide polymer used in the synthesis of the polymer).

(Example 2)

< Preparation of thiol-bi -terminated polysulfide polymer>

Using a reaction vessel equipped with a stirrer, while stirring, were heated the followings at 90 °C for 3 hours: 90 parts of a liquid polysulfide polymer (thiol-biterminated polysulfide polymer), 10 parts of a bifunctional epoxy compound, 2 parts of a polyfunctional epoxy compound and 0.08 part of a basic catalyst. Subsequently, was added 4 parts of a bifunctional thiol compound. The resultant was heated at 90 °C for 1.5 hours. By this, was synthesized a thiol-bi-terminated polysulfide.

Here, were used product name THIOKOL LP-55 (Mw 4000, thiol equivalent weight 2000 g/eq) available from Toray Fine Chemicals Co., Ltd. as the liquid polysulfide polymer (thiol-bi-terminated polysulfide polymer); bisphenol F epoxy resin (product name jER806, epoxy equivalent weight 169 g/eq) available from Mitsubishi Chemical as the bifunctional epoxy compound; phenol novolac epoxy resin (product name jER152, epoxy equivalent weight 177 g/eq) available from Mitsubishi Chemical as the polyfunctional epoxy compound; 2,4,6-triaminomethyl-phenol available from Tokyo Chemical Industry as the basic catalyst; and 3,6-dioxa-1,8-octanedithiol (thiol equivalent weight 91 g/eq) available from Tokyo Chemical Industry as the bifunctional thiol compound.

<Preparation of sealant sheet>

The reaction mixture was removed from the vessel and was allowed to cool to room temperature. Subsequently, for every 50 parts of the epoxy-bi-terminated polysulfide polymer, were added 0.5 part of a bifunctional secondary thiol, 0.6 part of a trifunctional allyl compound, 1.0 part of a photo-radical generator A as well as 20 parts of talc as the filler, shown in Table 1. The resulting mixture was evenly kneaded, using a two-roll mill. Using a vacuum presser, the resulting mixture was shaped into sheets to obtain sealant sheets according to this Example. Here, were prepared two kinds, a 0.2 mm thick sheet and a 1 mm thick sheet.

(Comparative Example 1)

Using a reaction vessel equipped with a stirrer, were added and mixed together 46 parts of a liquid polysulfide polymer (thiol-bi-terminated polysulfide polymer), 8.82 parts of a bifunctional secondary thiol, 5.46 parts of a bifunctional primary thiol, 9.96 parts of a trifunctional allyl compound, 0.4 part of a photo-radical generator A, and 20 parts of talc as the filler shown in Table 1. The resulting mixture was liquid at room temperature. This mixture was used as the sealant according to this Example.

(Comparative Examples 2 to 4)

Using the photo-radical generator species shown in Table 1, but otherwise in the same manner as Comparative Example 1, were prepared sealant sheets according to the respective Examples. All of the sealant sheets according to Comparative Examples 2 to 4 were liquid at room temperature.

The sealant sheets of Examples 1 and 2 were subjected to the following measurement or evaluation.

(Determination of storage modulus)

From the 1 mm thick sealant sheets, were punched out discs of 8 mm in diameter. Each disc was placed between parallel plates. Using a rheometer (model name ARES G2 available from TA Instruments Japan, Inc.), was determined the storage modulus G' at a measurement temperature of 25 °C, at a frequency of 1 Hz, at 0.5 % strain.

(Evaluation of appearance and curing properties)

To each face of a 0.2 mm thick sealant sheet, was adhered a 38 $\mu$m thick transparent PET film (DIAFOIL MRF38 available from Mitsubishi Chemical Corporation). Using a blacklight available from Toshiba Lighting & Technology Corporation, one side of the sealant sheet was then subjected to photoirradiation at 2000 mJ/cm$^2$. Subsequently, through the transparent PET film, the appearance of the sealant sheet was visually observed by the tester to check for the presence/absence of air bubbles inside the sealant sheet. As a result, the evaluation was "present" when air bubbles were observed, and "absent" when no air bubbles were visually observed. After the photoirradiation, the surface of the sealant sheet was touched by hand of the tester through the transparent PET film to check if the sealant sheet had cured. As a result, curing properties were evaluated as "good" when the sealant sheet had cured and "poor" when it had not cured. The results are shown in the corresponding part of Table 1.

The sealants of Comparative Examples 1 to 4 evaluated as follows. About 1 g of a sealant was collected and dropped on a 38 $\mu$m thick transparent PET film (DIAFOIL MRF38 available from Mitsubishi Chemical Corporation). On top of this, was further placed a 38 $\mu$m thick transparent PET film (DIAFOIL MRF38 available from Mitsubishi Chemical Corporation) to sandwich the sealant. Using a blacklight available from Toshiba Lighting & Technology Corporation, one side of the sealant was then subjected to photoirradiation at 2000 mJ/cm$^2$. Subsequently, through the transparent PET film, the appearance of the sealant sheet was visually observed by the tester to check for the presence/absence of air bubbles inside the sealant sheet. As a result, the evaluation was "present" when air bubbles were observed, and "absent" when no air bubbles were visually observed. After the photoirradiation, the surface of the sealant sheet was touched by hand of the tester through the transparent PET film to check if the sealant sheet had cured. As a result, curing properties were evaluated as "good" when the sealant sheet had cured and "poor" when it had not cured. The results are shown in the corresponding part of Table 1.

[Table 1]

Table 1

| | | Ex. 1 | Ex. 2 | Comp. Ex. 1 | Comp. Ex. 2 | Comp. Ex. 3 | Comp. Ex. 4 |
|---|---|---|---|---|---|---|---|
| Epoxy-bi-terminated polysulfide polymer (parts) | | 50 | - | - | - | - | - |
| Thio-bi-terminated polysulfide polymer (parts) | | - | 50 | - | - | - | - |
| Liquid polysulfide polymer [4)] (parts) | | - | - | 46 | 46 | 46 | 46 |
| Bifunctional secondary thiol compound [1)] (parts) | | 0.5 | 0.5 | 8.82 | 8.82 | 8.82 | 8.82 |
| Bifunctional primary thiol compound [2)] (parts) | | - | - | 5.46 | 5.46 | 5.46 | 5.46 |
| Trifunctional allyl compound[3)] (parts) | | 0.6 | 0.6 | 9.96 | 9.96 | 9.96 | 9.96 |
| Photo-radical generator A [5)] (parts) | | 1.0 | 1.0 | 0.4 | - | - | - |
| Photo-radical generator B [6)] (parts) | | - | - | - | 0.4 | - | - |
| Photo-radical generator C [7)] (parts) | | - | - | - | - | 0.4 | - |
| Photo-radical generator D [8)] (parts) | | - | - | - | - | - | 0.4 |
| Talc [9)] (parts) | | 20 | 20 | 20 | 20 | 20 | 20 |
| Before photoirradiation | Form | Sheet | Sheet | Liquid | Liquid | Liquid | Liquid |

(continued)

|  |  | Ex. 1 | Ex. 2 | Comp. Ex. 1 | Comp. Ex. 2 | Comp. Ex. 3 | Comp. Ex. 4 |
|---|---|---|---|---|---|---|---|
| After photoirradiation | Air bubbles | Absent | Absent | Present | Present | Present | Present |
|  | Curing properties | Good | Good | Good | Good | Good | Good |

1) Showa Denko, 1,4-bis(3-mercaptobutyloxy)butane, KARENZ® MT BD1, thiol eq. wt. 147.2 g/eq
2) Tokyo Chemical Industry, 3,6-dioxa-1,8-octanedithiol, thiol eq. wt. 91 g/eq
3) Tokyo Fine Chemicals, triallyl isocyanurate, allyl eq. wt. 83.1 g/eq
4) Toray Fine Chemicals, thiol-bi-terminated polysulfide polymer, THIOKOL® LP-55, Mw 4000, thiol eq. wt. 2000 g/eq
5) IGM Resins, 2-methyl-1-[4-(methylthio)phenyl]-2-morpholinopropane-1-one, OMNIRAD® 907
6) BASF, bis(2,4-cyclopentadienyl)bis[2,6-difluoro-3-(1-pyrryl)phenyl]titanium(IV), IRGACURE® 784
7) BASF, bis(2,4,6-trimethylbenzoyl)phenylphosphine oxide, IRGACURE® 819
8) IGM Resins, 2,2-dimethoxy-2-phenylacetophenone, OMNIRAD™ 651
9) Nippon Talc Co., Ltd., MICRO ACE® SG-95, nD=1.55, mean particle diameter 2.5 μm

The sealant sheets according to Examples 1 and 2 were both formed as sheets that were flexible before photoirradiation, and stably maintained the sheep shapes. The sealant sheets of Examples 1 and 2 showed good curing properties by photoirradiation and no air bubbles were observed inside the cured sheets. It is noted that when sealant sheets were prepared in the same manner as Examples 1 and 2 except that the photo-radical generator A was changed to photo-radical generator B, C or D, all showed good curing properties comparable to Examples 1 and 2 with no air bubbles inside the cured sheets.

The sealants according to Comparative Examples 1 to 4 showed good curing properties by photoirradiation, but air bubbles were observed inside the cured sealants in all cases.

Although specific embodiments of the present invention have been described in detail above, these are merely for illustrations and do not limit the scope of claims. The art according to the claims includes various modifications and changes made to the specific embodiments illustrated above.

[Reference Signs List]

21 sealant sheet
21A first face
21B second face
31, 32 release liners
100, 200 release-lined sealant sheets

**Claims**

1. A sealant sheet formed in a sheet shape, the sealant sheet comprising the following components:

   a polysulfide polymer (A),
   a thiol compound (B) having two or more thiol groups per molecule,
   an allyl compound (C) having two or more allyl groups per molecule, and
   a photo-radical generator (D).

2. The sealant sheet according to Claim 1, wherein the thiol compound (B) has a thiol equivalent weight of 45 g/eq or higher and 450 g/eq or lower.

3. The sealant sheet according to Claim 1 or 2, comprising, as the allyl compound (C), at least one species selected from the group consisting of bifunctional allyl compounds and trifunctional allyl compounds.

4. The sealant sheet according to any one of Claims 1 to 3, wherein the photo-radical generator (D) is at least one species selected from the group consisting of an alkyl phenome-based photopolymerization initiator, an acyl phosphine oxide-based photopolymerization initiator, and a titanocene compound-based photopolymerization initiator.

5. The sealant sheet according to any one of Claims 1 to 4, further comprising a filler.

6. The sealant sheet according to any one of Claims 1 to 5, having a storage modulus of 0.005 MPa or greater and 0.8 MPa or less at 25 °C.

7. A sealant sheet formed in a sheet shape, the sealant sheet comprising the following components:

   a thiol group-containing polysulfide polymer (AB) having two or more thiol groups per molecule,
   an allyl compound (C) having two or more allyl groups per molecule, and
   a photo-radical generator (D).

8. A release-linered sealant sheet comprising

   the sealant sheet according to any one of Claims 1 to 7, and
   a release liner having a release face in contact with at least one face of the sealant sheet.

[Fig. 1]

100

21B — 32
— 21
21A — 31

FIG.1

[Fig. 2]

200

21B — 21
21A — 31

FIG.2

## INTERNATIONAL SEARCH REPORT

| International application No. |
|---|
| **PCT/JP2022/012754** |

### A.    CLASSIFICATION OF SUBJECT MATTER

**_C09K 3/10_**(2006.01)i
FI:   C09K3/10 F

According to International Patent Classification (IPC) or to both national classification and IPC

### B.    FIELDS SEARCHED

Minimum documentation searched (classification system followed by classification symbols)

C09K3/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| A | WO 2020/004487 A1 (NITTO DENKO CORP) 02 January 2020 (2020-01-02)<br>claims 1-8 | 1-8 |
| A | WO 2019/146421 A1 (BOSTIK-NITTA CO., LTD.) 01 August 2019 (2019-08-01)<br>claims 1-6 | 1-8 |
| A | WO 2019/107486 A1 (NITTO DENKO CORP) 06 June 2019 (2019-06-06)<br>claims 1-14 | 1-8 |
| A | JP 10-17852 A (YOKOHAMA RUBBER CO LTD) 20 January 1998 (1998-01-20)<br>claims 1-3 | 1-8 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **31 March 2022** | **12 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/012754**

| Patent document cited in search report | | | Publication date (day/month/year) | Patent family member(s) | | | Publication date (day/month/year) |
|---|---|---|---|---|---|---|---|
| WO | 2020/004487 | A1 | 02 January 2020 | US<br>claims 1-8<br>EP<br>CN | 2021/0122956<br><br>3816257<br>112334562 | A1<br><br>A1<br>A | |
| WO | 2019/146421 | A1 | 01 August 2019 | US<br>claims 1-12<br>EP<br>CN<br>KR<br>TW | 2021/0054251<br><br>3744807<br>111699234<br>10-2020-0111199<br>201936875 | A1<br><br>A1<br>A<br>A<br>A | |
| WO | 2019/107486 | A1 | 06 June 2019 | US<br>claims 1-14<br>EP<br>CN | 2020/0291184<br><br>3719097<br>111417696 | A1<br><br>A1<br>A | |
| JP | 10-17852 | A | 20 January 1998 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021056892 A
- JP 2015517012 W
- JP 2018506543 W
- JP 2019521223 W